# FASCICULE DE BREVET EUROPEEN

(11) **EP 2 736 857 B1**
(45) Date de publication et mention de la délivrance du brevet: **09.03.2016**
(21) Numéro de dépôt: 12729565.7
(22) Date de dépôt: 20.06.2012
(51) Int. Cl.: C03C 15/00, C03C 15/02, C03C 19/00

(54) **PROCEDE DE FABRICATION D'UNE FEUILLE DE VERRE ANTIDERAPANTE**
VERFAHREN ZUR HERSTELLUNG EINER RUTSCHFESTEN GLASSCHEIBE
METHOD FOR MANUFACTURING A NON-SLIP GLASS SHEET

(30) Priorité: 28.07.2011 BE 201100476
(43) Date de publication de la demande: 04.06.2014
(73) Titulaire: AGC Glass Europe, 1348 Louvain-la-Neuve (BE)
(72) Inventeur: DENEIL, Christine, 6040 Jumet (BE); PIETERS, Ronny, 6040 Jumet (BE)
(74) Mandataire: Bayot, Daisy
(86) Numéro de dépôt international: PCT/EP2012/061836
(87) Numéro de publication internationale: WO 2013/013900

(56) Documents cités:
- EP-A1- 1 217 144
- EP-A1- 1 525 948
- WO-A2-2008/046877
- US-A- 5 242 544

## Description

### 1. Domaine de l'invention

La présente invention concerne un procédé de fabrication d'une feuille de verre à propriétés antidérapantes dont une partie d'une des faces a une rugosité plus élevée que le reste de cette face. En particulier, la présente invention concerne un procédé de fabrication d'une feuille de verre à propriétés antidérapantes dont une partie d'une des faces est texturée.

On entend par « texture », un verre translucide avec une finition satinée qui diffuse la lumière et peut assurer, par exemple, la protection des renseignements personnels. Ce type de verre est obtenu en enlevant une certaine quantité de matière du verre en surface, donnant une texture spécifique et/ou de la rugosité.

En raison de ses propriétés antidérapantes, l'article en verre obtenu par le procédé selon l'invention présente un avantage particulier pour une utilisation comme revêtement de sol ou de marches d'escalier, dans des applications extérieures et intérieures. Il peut également être utilisé pour des éléments de mobilier sur lesquels les objets ne doivent pas glisser ; par exemple, pour des tables, étagères ou présentoirs de magasins.

### 2. Solutions de l'art antérieur

Il est connu d'utiliser du verre dans la construction de planchers, de marches d'escaliers, mais cette utilisation a généralement été freinée du fait que le caractère lisse du verre le rend glissant, surtout lorsqu'il est humide.

Pour remédier à ce problème, il a par exemple été proposé de coller des zones de matière rugueuse à la surface du verre, notamment des bandes disposées transversalement au passage des personnes. Ces zones collées ne résistent cependant pas longtemps à l'usure. Elles se décollent, constituant ainsi un danger supplémentaire. De plus, cette solution ne permet pas facilement d'obtenir un verre antidérapant à aspect décoratif car elle ne présente qu'un degré de liberté faible quant aux motifs générés par les zones rugueuses.

Une autre solution connue de la demande WO2008/046877 Alconsiste à utiliser des feuilles de verre avec une rugosité élevée texturées à l'acide sur l'ensemble de leur surface, pour des applications de plancher ou escalier. Celles-ci ont l'avantage de masquer, du fait de leur aspect translucide, ce qui se situe sous le plancher.

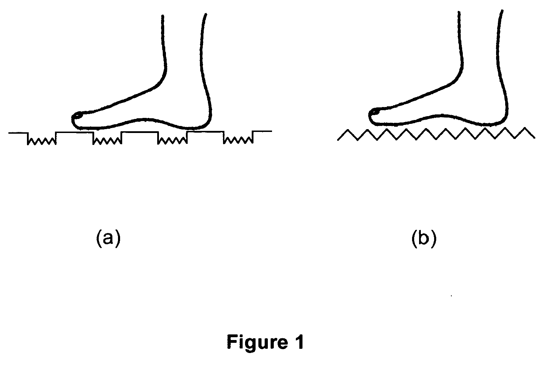

Il est également possible d'utiliser des feuilles de verre texturées à l'acide sur une partie seulement de leur surface générant ainsi des zones de rugosité plus élevée et des zones lisses (verre clair). Une telle feuille de verre texturées partiellement présente un avantage d'un point de vue esthétique car les zones texturées peuvent représenter un motif décoratif. Elles sont également plus appréciées d'un point de vue entretien qu'une feuille de verre matée sur toute sa surface car elles présentent des zones lisses facile à nettoyer en plus des zones texturées qui s'encrassent plus facilement. Toutefois, une telle feuille de verre ne présente pas de propriétés antidérapantes significatives car, tel qu'illustré à la figure 1 (a) montrant le profil de la surface de la feuille (échelle non respectée) et comparée au profil d'une feuille (b) texturée sur toute sa surface, du fait de la texturation qui se fait par enlèvement de matière, les zones rugueuses sont situées sous la surface de la feuille de verre restée lisse. Dès lors, lorsque le pied foule le sol (ou la marche d'escalier) fait d'une telle feuille de verre, il entre en contact essentiellement avec la surface lisse et non avec les zones rugueuses qui sont celles qui génèrent les propriétés antidérapantes.

A côté de cela, il a été proposé dans la demande EP805126 A1 d'augmenter la rugosité de certaines zones de la surface du verre par le dépôt d'une fritte de verre. L'adhérence de la fritte de verre au verre est obtenue par un traitement thermique (sintérisation). Un tel traitement est compliqué et onéreux. De plus, la sintérisation des particules de fritte arrondit leurs angles si bien que la rugosité conférée à la surface du verre n'est pas très élevée. Finalement, la rugosité est amenée grâce à une couche de matériau étranger au verre lui-même et recouvrant celui-ci. Ceci implique une dégradation de l'esthétique finale du produit verrier et une diminution de sa résistance à l'usure.

Il a également été proposé, dans la demande EP937689 A1, une alternative qui consiste à générer des creux dans le verre et à les remplir avec une résine comprenant des grains d'un matériau dur. Dans ce cas également, la rugosité est amenée grâce à un matériau étranger au verre impliquant une dégradation de l'esthétique finale du produit verrier et une diminution de sa résistance à l'usure.

### 3. Objectifs de l'invention

L'invention a notamment pour objectif de pallier ces inconvénients de l'art antérieur. En particulier, un objectif de l'invention est de fournir un procédé de fabrication d'une feuille de verre à propriétés antidérapantes très satisfaisantes, stables dans le temps, peu sensible à l'usure (ne présentant pas de matériau étranger au verre), d'esthétique agréable et facile d'entretien.

Un autre objectif de l'invention, dans au moins un de ses modes de réalisation, est de fournir un procédé de fabrication d'une feuille de verre texturée sur une partie de sa surface et présentant des propriétés antidérapantes très satisfaisantes.

L'invention, dans au moins un de ses modes de réalisation, a également pour objectif de fournir un procédé de fabrication d'une feuille de verre texturée sur une partie de sa surface et présentant un degré de liberté élevé quant aux motifs décoratifs sur la feuille de verre.

Finalement, l'invention, dans au moins un de ses modes de réalisation, a également pour objectif de fournir un procédé de fabrication d'une feuille de verre à propriétés antidérapantes qui soit rapide et économique.

### 4. Exposé de l'invention

Conformément à un mode de réalisation particulier, l'invention concerne un procédé de fabrication d'une feuille de verre texturée à propriétés antidérapantes comprenant les étapes successives suivantes :
a) une étape de texturation de l'ensemble d'une surface d'une feuille de verre ;
b) une étape de protection sélective durant laquelle une partie de la surface texturée de la feuille est protégée par une couche protectrice ;
c) une étape de lissage durant laquelle les zones texturées de la surface non protégées par la couche protectrice sont relissées ; et
d) une étape de finissage durant laquelle la couche protectrice est enlevée.

Ainsi, l'invention repose sur une approche tout à fait nouvelle et inventive car elle permet de solutionner les inconvénients de l'art antérieur précités et de résoudre le problème technique posé. Les inventeurs ont en effet mis en évidence qu'il était possible, avec la succession des étapes du procédé de l'invention d'obtenir une feuille de verre à propriétés antidérapantes très satisfaisantes, stables dans le temps, peu sensible à l'usure (ne présentant pas de matériau étranger au verre), d'esthétique agréable (texturée sur une partie de sa surface) et facile d'entretien.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquelles :
la figure 2 présente schématiquement (a) les étapes consécutives du procédé selon l'invention ainsi que (b) le profil en coupe (échelle non respectée) de la surface de la feuille obtenue après chaque étape
la figure 3 montre schématiquement des exemples de feuilles de verre texturées susceptibles d'être obtenues par la procédé de l'invention.

### 6. Description d'un mode de réalisation de l'invention

La feuille utilisée dans le procédé selon l'invention est faite de verre pouvant appartenir à diverses catégories. Le verre peut ainsi être un verre de type sodo-calcique, un verre au bore, un verre au plomb, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. De préférence, le verre de l'invention est de type sodo-calcique. Le verre de l'invention peut un verre flotté, un verre étiré ou un verre type « cast » (laminé entre des rouleaux). Il peut être clair, extra-clair, ou coloré dans la masse. L'expression "verre sodo-calcique" est utilisée ici dans son sens large et concerne tout verre qui contient les composants de base suivants (exprimés en pourcentages en poids total de verre) :

| | |
|---|---|
| SiO₂ | 60 à 75 % |
| Na₂O | 10 à 20 % |
| CaO | 0 à 16 % |
| K₂O | 0 à 10 % |
| MgO | 0 à 10 % |
| Al₂O₃ | 0 à 5 % |
| BaO | 0 à 2 % |
| BaO + CaO + MgO | 10 à 20 % |
| K₂O + Na₂O | 10 à 20 %. |

Elle désigne aussi tout verre comprenant les composants de base précédents qui peut comprendre en outre un ou plusieurs additifs.

Selon un mode de réalisation, la feuille de verre est une feuille de verre flotté. De préférence, la feuille de verre est une feuille de verre flotté de type sodo-calcique.

La feuille de verre peut avoir une épaisseur allant de 1,8 à 16,2 mm. De préférence, afin d'obtenir une résistance mécanique adéquate dans le cas d'une utilisation pour un plancher ou des marches d'escalier, la feuille de verre est épaisse (par exemple, d'épaisseur supérieure à 6 mm).

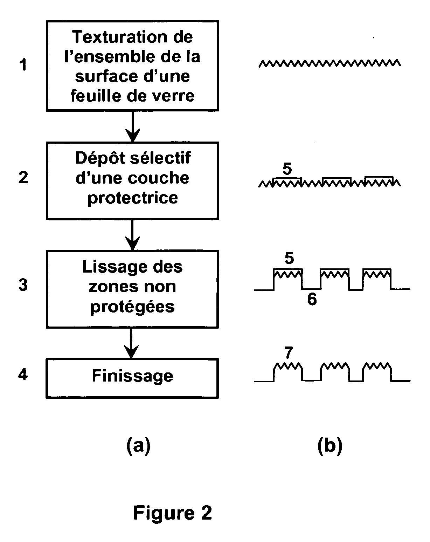

Tel qu'illustré à la figure 2, le procédé de l'invention comprend une étape 1 de texturation de l'ensemble d'une surface d'une feuille de verre. Par surface de la feuille de verre, on entend l'une des deux faces principales de ladite feuille. Bien entendu, l'invention n'est pas limitée au traitement d'une seule des deux faces. Selon l'invention, par l'ensemble de la surface, on entend au moins 80% de la surface et de préférence, au moins 90% de la surface, voire au moins 95 % de la surface.

Par texturation, on entend l'attaque par élimination d'une certaine quantité de matière sur le dessus de la surface de la feuille de verre. La texturation selon l'invention peut être réalisée par toute méthode connue produisant une surface avec une rugosité/texture résultant de la création d'irrégularités à la surface.

L'étape de texturation selon l'invention peut être (i) une texturation acide, (ii) une texturation basique ou (iii) un sablage (attaque mécanique).

La texturation acide selon l'invention peut être réalisée de façon classique au moyen d'une attaque chimique contrôlée avec une solution aqueuse à base d'acide fluorhydrique. L'attaque acide peut être réalisée une ou plusieurs fois. En règle générale, les solutions aqueuses acides utilisées à cet effet ont un pH entre 0 et 5, et elles peuvent comprendre, en plus de l'acide fluorhydrique lui-même, des sels de cet acide, d'autres acides comme HCl, H₂SO₄, HNO₃, acide acétique, acide phosphorique et/ou leurs sels (par exemple, Na₂SO₄, K₂SO₄, (NH₄)₂SO₄, BaSO₄, ...) et également, d'autres adjuvants dans des proportions mineures. Les sels alcalins et d'ammonium sont généralement préférés, comme par exemple le bifluorure de sodium, de potassium et d'ammonium. L'étape de texturation acide selon l'invention peut être avantageusement réalisée par attaque acide contrôlée, pendant plus de 5 minutes, de préférence entre 5 et 30 minutes (en fonction de la solution d'acide utilisée et de la rugosité désirée) sur la surface de la feuille de verre.

La texturation basique selon l'invention peut être réalisée de façon classique au moyen d'une attaque contrôlée avec une solution (par exemple, aqueuse ou un mélange alcool-eau) d'un ou plusieurs hydroxydes et/ou carbonates d'alcalin (par exemple, LiOH, NaOH , KOH, K₂CO₃ ou Na₂CO₃) à haute température (par exemple, 300°C ou plus). L'attaque basique peut être réalisée une ou plusieurs fois. En règle générale, les solutions basiques d'attaque ont un pH supérieur à 9 ou, de préférence, supérieur à 10.

La texturation par sablage selon l'invention peut être réalisée de façon classique par projection à grande vitesse d'un matériau de grains abrasifs sur la surface de la feuille de verre. La nature du matériau en grains peut être choisie en fonction de la rugosité/texture/estthétique désirée.

Tel qu'illustré à la figure 2, le procédé de l'invention comprend ensuite une étape 2 de protection sélective durant laquelle une partie de la surface de la feuille texturée est protégée par une couche protectrice 5, qui est résistante à l'étape de lissage ultérieur.

L'étape de protection sélective 2 selon l'invention peut consister en l'application manuelle de la couche protectrice qui est constituée de ruban adhésif (ou « tape ») résistant au traitement ultérieur de lissage, sur les zones qui ne doivent pas subir le lissage.

L'étape de protection 2 selon l'invention peut également consister, comme décrit par exemple dans US4451329, en l'application sélective sur la feuille de verre d'une composition polymérique réticulable sous forme liquide, qui est ensuite réticulée afin de former la couche protectrice. En particulier, la composition polymérique réticulable peut être déposée par sérigraphie, par pulvérisation ou au moyen d'au moins une tête à jet d'encre. La réticulation de la composition liquide (« ou curing ») peut ensuite être réalisée grâce à l'action de la chaleur (thermoréticulation) et/ou grâce à une irradiation (photoréticulation) par exemple, infrarouge ou ultraviolette.

L'étape de protection 2 selon l'invention peut également consister en l'application sélective sur la feuille de verre d'un revêtement de cire à bas point de fusion. Par cire à bas point de fusion, on entend une cire dont le point de fusion est de 25 à 200°C. De manière préférée, la cire à bas point de fusion selon l'invention présente un point de fusion de 50 à 140°C.

En particulier, la cire à bas point de fusion peut être déposée sous forme fondue par sérigraphie ou par un applicateur à chaud ou encore au moyen d'au moins une tête à jet d'encre qui fond la cire comme par exemple décrit dans la demande de brevet WO2006/087320 A1. La cire fondue qui entre en contact avec le verre se solidifie et génère la couche protectrice.

De préférence, la couche protectrice 5 selon l'invention est un revêtement à base de cire à bas point de fusion ou une composition polymérique réticulable. Avantageusement, lorsque la couche protectrice selon l'invention est un revêtement à base de cire à bas point de fusion ou une composition polymérique réticulable, elle est de préférence déposée au moyen d'au moins une tête à jet d'encre. Un tel mode d'application de la couche protectrice permet une automatisation aisée de l'étape de protection selon l'invention. Elle permet également une bonne reproductibilité du dépôt sur des surfaces importantes.

Tel qu'illustré à la figure 2, le procédé de l'invention comprend ensuite une étape de lissage 3, consécutive à l'étape 2 de protection sélective, durant laquelle les zones texturées de la surface non protégées par la couche protectrice sont relissées. Cette étape 3 consiste en une attaque par enlèvement de matière de la surface texturée non protégée, qui est plus agressive que l'attaque utilisée pour l'étape de texturation. Cette étape implique nécessairement un creusage dans la profondeur du verre afin de faire disparaître ou du moins atténuer fortement les irrégularités générées par la texturation et ainsi de rendre moins rugueuse (autrement dit de « relisser ») les zones texturées non protégées. Tel qu'illustré à la figue 2 (b), cette étape 3 permet donc d'obtenir des zones rugueuses (celles qui ont été préalablement protégées) qui sont situées au-dessus des zones 6 de la feuille de verre qui sont relissées. Dès lors, dans ce cas, lorsque le pied foule le sol (ou la marche d'escalier) fait d'une telle feuille de verre, il entre en contact essentiellement avec les zones rugueuses 7 et non avec les zones lisses 6, qui sont situées sous la surface de contact.

Selon l'invention, la profondeur de creusage entre les zones 7 texturées et les zones 6 relissées est supérieure à environ 20 µm, et de préférence supérieure à environ 40 µm.

Les propriétés optiques des zones 6 relissées sont proches de celles d'un verre clair (notamment, faible rugosité, haute transmission lumineuse et haze faible). La présence de zones 7 texturées et de zones 6 relissées donne donc à la feuille de verre l'aspect d'une feuille de verre texturée partiellement mais avec de bonnes propriétés antidérapantes.

L'étape 3 de lissage selon l'invention peut être réalisée par toute méthode connue permettant de lisser une surface préalablement texturée. L'étape 3 de lissage selon l'invention peut être (i) un lissage par voie acide ou (ii) un lissage par voie basique.

Le lissage par voie acide selon l'invention peut être réalisé au moyen d'une attaque chimique contrôlée avec une solution aqueuse à base d'acide fluorhydrique. L'attaque acide peut être réalisée une ou plusieurs fois. En règle générale, les solutions aqueuses acides utilisées à cet effet ont un pH entre 0 et 3, et elles peuvent comprendre, en plus de l'acide fluorhydrique lui-même, des sels de cet acide, d'autres acides comme HCl, H₂SO₄, HNO₃, acide acétique, acide phosphorique et/ou leurs sels (par exemple, Na₂SO₄, K₂SO₄, (NH₄)₂SO₄, BaSO₄, ...) et également, d'autres adjuvants dans des proportions mineures. Les sels alcalins et d'ammonium sont généralement préférés, comme par exemple le bifluorure de sodium, de potassium et d'ammonium.

Le lissage basique selon l'invention peut être réalisé au moyen d'une attaque contrôlée avec une solution (par exemple, aqueuse ou un mélange alcool-eau) d'un ou plusieurs hydroxydes et/ou carbonates d'alcalin (par exemple, LiOH, NaOH , KOH, K₂CO₃ ou Na₂CO₃) à haute température (par exemple, 300°C ou plus). L'attaque basique peut être réalisée une ou plusieurs fois. En règle générale, les solutions basiques d'attaque ont un pH supérieur à 9 ou, de préférence, supérieur à 10.

Tel qu'illustré à la figure 2, le procédé de l'invention comprend finalement une étape 4 de finissage, durant laquelle la couche protectrice 5 est enlevée. La façon dont est réalisé l'enlèvement de la couche protectrice dépend de la couche protectrice utilisée et est à la portée de l'homme du métier. Ainsi, si un ruban adhésif est utilisé comme couche protectrice, celui-ci sera simplement ôté/décollé à la main. Si une couche protectrice de type cire à bas point de fusion est utilisée, celle-ci peut être enlevée manuellement par décollement de la cire solidifiée ou avantageusement, par projection d'une solution chaude (aqueuse ou organique) qui permettra d'entraîner la fusion de la cire qui s'écoulera. Si une couche protectrice de type composition polymérique réticulée est utilisée, celle-ci peut être avantageusement éliminée par projection d'eau sous pression.

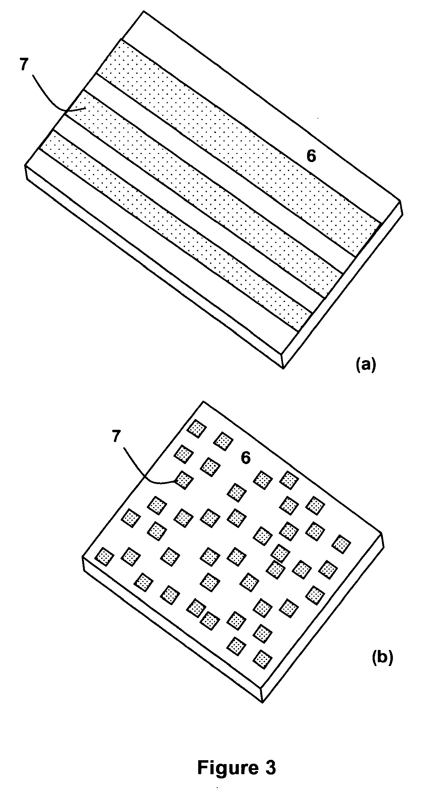

Les zones texturées 7 à rugosité plus élevée peuvent se présenter sous forme de bandes, d'un quadrillage, sous forme de plots séparés, sous forme de dessins, de logos. Les zones texturées 7 peuvent être de formes géométriques ou non, variées ou toutes identiques, réparties régulièrement ou de façon quelconque. Par exemple, des zones sous forme de bandes, disposées transversalement au passage des personnes, sont particulièrement adaptées pour des marches d'escalier. La figure 3 donne des exemples de zones texturées pouvant être obtenues par le procédé selon l'invention : (a) sous formes de bandes et (b) répartition aléatoires de plots de forme carrée.

Aussi, en fonction du taux de recouvrement de la feuille de verre par les zones texturées 7, il est possible de moduler les propriétés antidérapantes de la feuille de verre. De manière préférée, les zones rugueuses représentent au moins 20 % de la surface de la feuille de verre. De manière plus préférée, les zones rugueuses représentent au moins 30 % de la surface de la feuille de verre.

La rugosité de surface d'un verre texturé est usuellement caractérisée par les paramètres Rz et Rsm (exprimés en µm) et le rapport Rz/Rsm entre ces deux paramètres.

Les zones texturées 7 de la feuille de verre présentent préférentiellement une rugosité de surface définie par :
- une valeur Rz supérieure à 9 µm et inférieure à 22 µm, et
- un rapport Rz/Rsm supérieur à 0,12 et inférieur à 0,30.

De manière toute préférée, les zones texturées 7 présentent une rugosité de surface définie par :
- une valeur Rz supérieure à 12, de préférence supérieure à 14, plus préférentiellement supérieure à 16 et inférieure à 20, et
- un rapport Rz/Rsm supérieur à 0,18, supérieur à 0,20, de préférence supérieur à 0,21, plus préférentiellement supérieur à 0,22 et inférieur à 0,28, de préférence inférieur à 0,26.

La feuille de verre obtenue par le procédé selon l'invention possède des propriétés antidérapantes durables et qui persistent même au contact de semelles mouillées. En particulier, la feuille de verre obtenue par le procédé selon l'invention possède des propriétés antidérapantes, évaluées par la mesure de la variation des coefficients de friction statique et dynamique (µₛ et µₖ). Le procédé de l'invention permet ainsi d'augmenter le coefficient de friction (statique et dynamique) de l'entièreté de la feuille de verre (l'ensemble des zones texturées et relissées).

Avantageusement, la feuille de verre selon l'invention, lorsqu'elle est testée selon la norme DIN 51130:2004-6, montre des propriétés antidérapantes allant de R9 à R11, de préférence, elles atteignent R11.

Selon l'invention, la feuille de verre obtenue par le procédé selon l'invention après l'étape 4 de finissage peut être ensuite trempée thermiquement ou chimiquement, ou simplement recuite ou encore durcie.

De manière préférée, pour respecter les normes de sécurité, la feuille de verre obtenue par le procédé selon l'invention après l'étape de 4 finissage est feuilletée, c'est-à-dire qu'elle est laminée à une autre feuille de verre au moyen d'un film thermoplastique et la face dont une présente une rugosité plus élevée constitue une face extérieure de l'ensemble feuilleté, la rugosité étant positionnée alors du côté praticable lors du montage.

La feuille de verre à propriétés antidérapantes obtenue par le procédé selon l'invention peut être produite selon diverses dimensions. A titre d'exemple, en tant que dalle de plancher, on peut adopter une feuille de verre carrée de 50x50 cm, 80x80 cm ou 1mx1m de 8 mm d'épaisseur, feuilletée à une autre feuille de verre clair de 8 mm d'épaisseur, au moyen d'un film intercalaire de polyvinylbutyral. A titre d'exemple également, des marches d'escalier peuvent avoir par exemple 30 cm de large et 90 cm de long et être constituées de deux feuilles de verre de 10 mm d'épaisseur assemblées au moyen de polyvinylbutyral.

De préférence, pour les applications citées, une seule face de la feuille de verre présente des zones de rugosité plus élevée. Toutefois, la face opposée à celle présentant les zones rugueuses peut également être texturée (totalement ou partiellement).

Les exemples qui suivent illustrent l'invention, sans intention de limiter de quelque façon sa couverture.

### Exemple 1 (conforme à l'invention)

Une feuille de verre clair, de 8 mm d'épaisseur, de 30 cm de large et de 90 cm de long a été nettoyée au préalable avec un détergent aqueux et soigneusement rincée à l'eau puis séchée.

La feuille de verre a ensuite été traitée par attaque acide d'une manière connue: une solution acide composée de 170 ml de HF à 40%, 100 g de Na₂CO₃, 170 ml d'acide acétique glacial et 660 ml d'eau à 25 °C a été versée sur toute la surface de la feuille de verre et laissée en place pendant 8 minutes. La solution a ensuite été éliminée par rinçage à l'eau puis la feuille de verre a été nettoyée avec une solution détergente aqueuse.

Une couche protectrice faite de cire à bas point de fusion (paraffine microcristalline constituée de chaînes hydrocarbonées ramifiées de Paramelt, HG grade, point de fusion : 80-86°C) a été déposée sélectivement sur certaines parties de la surface de la feuille, en représentant des bandes disposées dans la longueur (de 1 cm de largeur et espacées de 2 cm). Le dépôt de la cire fondue a été réalisé par jet d'encre grâce à trois excursions successives d'une tête à jet d'encre comprenant 256 gicleurs agencés sur une ligne droite. La tête à jet d'encre a été portée à 110°C et a réalisé l'éjection de la cire à 18000 Hz.

La feuille de verre a ensuite été traitée par attaque acide au moyen d'une solution composée de 880 ml de HF à 40%, 200 ml de HCl à 37%, 130 ml d'acide sulfurique à 95% et 50 g de bifluorure d'ammonium à 25°C. La solution a été versée sur toute la surface de la feuille de verre et laissée en place pendant 8 minutes. Elle a ensuite été éliminée par rinçage à l'eau et la feuille de verre a été nettoyée avec une solution détergente aqueuse.

La couche protectrice de cire a finalement été éliminée avec un jet d'eau chaude sous pression.

Les mesures de rugosité des zones texturées et lissées ainsi que de la profondeur de creusage après lissage données dans cet exemple et le suivant ont été obtenues avec un appareil Taylor-Hobson Talysurf, en mode de rugosité, avec les paramètres suivants:
- Shape: LS line
- Type de filtre: 2CR-PC
- Longueur de l'échantillon: 20 mm
- Cut-off: "use the whole selected data length"
- short range filter: 0,008 mm
- long range filter: 0,8 mm.

Les résultats suivants ont été obtenus pour la rugosité des zones texturées: Rz = 9,7 µm ; Rsm = 68,0 µm et Rz/Rsm = 0,14

Les résultats suivants ont été obtenus pour la rugosité des zones relissées: Rz = 2,4 µm ; Rsm = 138,0 µm et Rz/Rsm = 0,018.

Une profondeur de creusage de 70 µm a été mesurée entre les zones texturées et les zones relissées.

Les coefficients de friction statique (µₛ) et dynamique (µₖ) donnés dans cet exemple et les suivants ont été obtenus avec un équipement Ray-Ran testeur de friction, selon la norme ISO 8295 :1995. Les résultats suivants ont été obtenus pour la feuille de verre totalement texturée : µₛ = 0,77 et µₛ = 0,64. Les résultats suivants ont été obtenus après relissage partiel de la feuille de verre selon cet exemple : µₛ = 0,87 et µₖ = 0,92. Ces valeurs sont à comparer avec les valeurs correspondant à une feuille de verre à propriétés anti-dérapantes selon l'exemple de WO2008/046877 (texturée à l'acide sur l'ensemble de sa surface, et de rugosité plus élevée) qui sont les suivantes : µₛ = 0,94 et µₖ = 0,85. Cet exemple montre donc qu'une feuille de verre à propriétés anti-dérapantes satisfaisantes, comparables à celles obtenues pour une feuille de verre texturée totalement et à haute rugosité, grâce à une texturation plus modérée mais partielle et selon l'invention.

### Exemple 2 (conforme à l'invention)

Une feuille de verre clair, de 8 mm d'épaisseur et de 50x50 cm, a été nettoyée au préalable avec un détergent aqueux et soigneusement rincée à l'eau puis séchée.

La feuille de verre a ensuite été traitée par attaque acide d'une manière connue: une solution acide composée de 170 ml de HF à 40%, 100 g de Na₂CO₃, 170 ml d'acide acétique glacial et 660 ml d'eau à 25 °C a été versée sur toute la surface de la feuille de verre et laissée en place pendant 25 minutes. La solution a ensuite été éliminée par rinçage à l'eau puis la feuille de verre a été nettoyée avec une solution détergente aqueuse.

Une composition polymérique photoréticulable à l'UV a été déposée sélectivement sur certaines parties de la surface de la feuille, en représentant des bandes disposées dans la longueur (de 1 cm de largeur et espacées de 2 cm). Le dépôt de la composition polymérique sous forme liquide a été réalisé par jet d'encre par jet d'encre grâce à quatre excursions successives d'une tête à jet d'encre comprenant 256 gicleurs agencés sur une ligne droite. La réticulation a été faite simultanément au dépôt grâce à une lampe UV.

La feuille de verre a ensuite été traitée par attaque acide au moyen d'une solution composée de 430 ml de HF à 40%, 270 ml de HCl à 37%, 180 ml d'acide sulfurique à 95% , 320 g de bifluorure d'ammonium et 160 ml d'eau à 25°C. La solution a été versée sur toute la surface de la feuille de verre et laissée en place pendant 8 minutes. Elle a ensuite été éliminée par rinçage à l'eau et la feuille de verre a été nettoyée avec une solution détergente aqueuse.

La couche protectrice a finalement été éliminée avec un jet d'eau sous pression.

Les résultats suivants ont été obtenus pour la rugosité des zones texturées: Rz = 18,10 µm; Rsm = 77,89 µm et Rz/Rsm = 0,23 µm.

Les résultats suivants ont été obtenus pour la rugosité des zones relissées: Rz = 2,9 µm ; Rsm = 94.2 µm et Rz/Rsm = 0.031

Une profondeur de creusage de 51 µm a été mesurée entre les zones texturées et les zones relissées.

Les résultats suivants de coefficients de friction statique (µₛ) et dynamique (µₖ) ont été obtenus pour la feuille de verre totalement texturée : µₛ = 0.94 et µₖ= 0.85. Les résultats suivants ont été obtenus après relissage partiel de la feuille de verre selon cet exemple : µₛ = 0.99 et µₖ = 1.21. Cet exemple montre donc qu'une feuille de verre à propriétés anti-dérapantes très satisfaisantes, supérieures à celles obtenues pour la feuille de verre texturée totalement, grâce à une texturation partielle selon l'invention.

## Revendications

1. Procédé de fabrication d'une feuille de verre texturée à propriétés antidérapantes, **caractérisé en ce qu'**il comprend les étapes successives suivantes :
a) une étape 1 de texturation de l'ensemble d'une surface d'une feuille de verre ;
b) une étape 2 de protection sélective durant laquelle une partie de la surface texturée de la feuille est protégée par une couche protectrice 5;
c) une étape 3 de lissage durant laquelle les zones texturées de la surface non protégées par la couche protectrice 5 sont relissées ; et
d) une étape 4 de finissage durant laquelle la couche protectrice 5 est enlevée.

2. Procédé de fabrication selon la revendication 1, **caractérisé en ce que** la texturation est une texturation acide, une texturation basique ou un sablage.

3. Procédé de fabrication selon la revendication précédente, **caractérisé en ce que** la texturation est une texturation acide.

4. Procédé de fabrication selon l'une des revendications précédentes, **caractérisé en ce que** la couche protectrice 5 est un revêtement à base de cire à bas point de fusion.

5. Procédé de fabrication selon l'une des revendications 1 à 3, **caractérisé en ce que** la couche protectrice 5 est une composition polymérique réticulable.

6. Procédé de fabrication selon l'une des revendications 4 ou 5, **caractérisé en ce que** la couche protectrice 5 est déposée au moyen d'au moins une tête à jet d'encre.

7. Procédé de fabrication selon l'une des revendications précédentes, **caractérisé en ce que** le lissage est un lissage par voie acide ou un lissage par voie basique.

8. Procédé de fabrication selon l'une des revendications précédentes, **caractérisé en ce que** la feuille de verre est une feuille de verre flotté de type sodo-calcique.

## Patentansprüche

1. Verfahren zur Herstellung einer texturierten Glasscheibe mit rutschfesten Eigenschaften, **dadurch gekennzeichnet, dass** es die folgenden aufeinanderfolgenden Schritte umfasst:
a) einen Schritt 1 der Texturierung der Gesamtheit einer Fläche einer Glasscheibe,
b) einen Schritt 2 des gezielten Schützens, während dessen ein Teil der texturierten Fläche der Scheibe durch eine Schutzschicht 5 geschützt wird,
c) einen Schritt 3 des Glättens, während dessen die texturierten Bereiche der Fläche, die nicht durch die Schutzschicht 5 geschützt sind, wieder geglättet werden, und
d) einen Endbearbeitungsschritt 4, während dessen die Schutzschicht 5 entfernt wird.

2. Herstellungsverfahren nach Anspruch 1, **dadurch gekennzeichnet, dass** die Texturierung eine saure Texturierung, eine basische Texturierung oder ein Sandstrahlen ist.

3. Herstellungsverfahren nach dem vorhergehenden Anspruch, **dadurch gekennzeichnet, dass** die Texturierung eine saure Texturierung ist.

4. Herstellungsverfahren nach einem der vorhergehenden Ansprüche, **dadurch gekennzeichnet, dass** die Schutzschicht 5 eine Beschichtung auf der Basis von Wachs mit niedrigem Schmelzpunkt ist.

5. Herstellungsverfahren nach einem der Ansprüche 1 bis 3, **dadurch gekennzeichnet, dass** die Schutzschicht 5 eine vernetzbare polymere Zusammensetzung ist.

6. Herstellungsverfahren nach einem der Ansprüche 4 oder 5, **dadurch gekennzeichnet, dass** die Schutzschicht 5 mittels mindestens eines Tintenstrahlkopfs aufgebracht wird.

7. Herstellungsverfahren nach einem der vorhergehenden Ansprüche, **dadurch gekennzeichnet, dass** die Glättung eine Glättung mit Säure oder eine Glättung mit Base ist.

8. Herstellungsverfahren nach einem der vorhergehenden Ansprüche, **dadurch gekennzeichnet, dass** die Glasscheibe eine Kalk-Natron-Floatglasscheibe ist.

## Claims

1. Method for manufacturing a textured glass sheet having non-slip properties, **characterized in that** it comprises the following consecutive steps:
a) a step 1 of texturing the entire surface of a glass sheet;
b) a selective protection step 2 during which a portion of the textured surface of the sheet is protected by a protective layer 5;
c) a smoothing step 3 during which the textured areas of the surface not protected by the protective layer 5 are re-smoothed; and
d) a finishing step 4 during which the protective layer 5 is removed.

2. Manufacturing method according to Claim 1, **characterized in that** the texturing is an acid texturing, a basic texturing or a sandblasting.

3. Manufacturing method according to the preceding claim, **characterized in that** the texturing is an acid texturing.

4. Manufacturing method according to one of the preceding claims, **characterized in that** the protective layer 5 is a coating based on low-melting-point wax.

5. Manufacturing method according to one of Claims 1 to 3, **characterized in that** the protective layer 5 is a crosslinkable polymer composition.

6. Manufacturing method according to either of Claims 4 and 5, **characterized in that** the protective layer 5 is deposited using at least one inkjet head.

7. Manufacturing method according to one of the preceding claims, **characterized in that** the smoothing is an acid smoothing or a basic smoothing.

8. Manufacturing method according to one of the preceding claims, **characterized in that** the glass sheet is a soda-lime-silica float glass sheet.
